# EUROPEAN PATENT SPECIFICATION

(11) **EP 3 113 374 B1**
(45) Date of publication and mention of the grant of the patent: **11.09.2019**
(21) Application number: 15751791.3
(22) Date of filing: 13.02.2015
(51) Int. Cl.: H04W 88/06, H04W 84/18, H04W 52/02, H04B 1/40, H04Q 1/28, H04W 4/70

(54) **REDUCTION OF THE TIME TO START UP A SECOND COMMUNICATION UNIT**
REDUZIERUNG DER ANLAUFZEIT EINER ZWEITEN KOMMUNIKATIONSEINHEIT
RÉDUCTION DU TEMPS DE DÉMARRAGE D'UNE DEUXIÈME UNITÉ DE COMMUNICATION

(30) Priority: 24.02.2014 JP 2014033189
(43) Date of publication of application: 04.01.2017
(73) Proprietor: Panasonic Intellectual Property Management Co., Ltd., Osaka-shi, Osaka 570-6207 (JP)
(72) Inventor: NISHIO, Akihiko, Osaka-shi, Osaka 540-6207 (JP); HOSHIBA, Keitaro, Osaka-shi, Osaka 540-6207 (JP); KURITA, Masanori, Osaka-shi, Osaka 540-6207 (JP); MATSUMOTO, Kazuhiro, Osaka-shi, Osaka 540-6207 (JP); NAGATA, Masahiro, Osaka-shi, Osaka 540-6207 (JP); KOHROGI, Takeshi, Osaka-shi, Osaka 540-6207 (JP)
(74) Representative: Appelt, Christian W.
(86) International application number: PCT/JP2015/000650
(87) International publication number: WO 2015/125442

(56) References cited:
- WO-A1-2013/132540
- JP-A- 2010 245 740
- US-A1- 2007 265 009
- US-A1- 2009 086 660
- US-A1- 2013 322 316

## Description

### Technical Field

The present invention generally relates to communication devices and communication systems including the communication devices, and specifically to a communication device including a plurality of communication units and a communication system including the communication device.

### Background Art

A communication system including a device including a plurality of communication units has been known and disclosed in, for example, Document 1 (JP 2010-108040 A). The communication system described in Document 1 includes an inquiry apparatus, a response apparatus configured to wirelessly communicate with the inquiry apparatus, and a sensor configured to wirelessly communicate with the inquiry apparatus. When the sensor senses an entrance of a target into a predetermined area, the sensor transmits a start-up signal to the inquiry apparatus. When the inquiry apparatus receives the start-up signal, the inquiry apparatus starts transmitting an inquiry signal. When the response apparatus receives the inquiry signal, the response apparatus transmits a response signal in response to the inquiry signal.

More specifically, the inquiry apparatus includes a start-up signal reception unit (first communication unit), an inquiry signal transmission unit (second communication unit), and a control unit. The first communication unit has a function of checking for a start-up command in the start-up signal when the first communication unit receives the start-up signal, and requesting the control unit to transmit the inquiry signal. When the second communication unit receives the request from the control unit, the second communication unit generates the inquiry signal, and the second communication unit requests an LF signal transmission unit to transmit the generated inquiry signal. When the LF signal transmission unit receives the request, the LF signal transmission unit transmits the received inquiry signal via an LF antenna.

However, in the conventional example, the first communication unit checks for the start-up command in the start-up signal, and then requests the control unit to start transmitting the inquiry signal. Therefore, in the conventional example, when the start-up signal reception unit cannot confirm the start-up command (that is, when the start-up signal reception unit fails to acquire the start-up command), the start-up signal reception unit has to wait for the start-up signal to be retransmitted. This may delay a start of communication by the second communication unit.

Document US 2007/0265009 A1 discloses an information terminal device (terminal) having a first radio communication unit capable of performing radio communication with low power consumption and a second radio communication unit performing data communication using a wireless LAN. In an ad-hoc mode in which data communication is performed between the terminals, the second radio communication unit is set in a sleep mode. However, when actual data communication is necessary, an activation signal is transmitted to a terminal as a communication party by using the first radio communication unit to activate the second radio communication unit.

### Summary of Invention

The invention relates to a communication device according to claim 1 and to a communication system according to claim 11. Further embodiments are defined in the dependent claims.

### Brief Description of Drawings

**FIG. 1** is a schematic diagram of the configuration of a communication system of an embodiment of the present invention;
**FIG. 2** is a time chart illustrating an example of the operation of a communication device of the embodiment of the present invention;
**FIG. 3** is a time chart illustrating an example of the operation of a conventional communication device;
**FIG. 4** is a time chart illustrating an example of the operation the communication device of the embodiment of the present invention in a case where an electric wave check is performed;
**FIG. 5** is a time chart illustrating an example of the operation of the communication device of the embodiment of the present invention in a case where a first time period is set; and
**FIG. 6** is a time chart illustrating an example of the operation of the communication device of the embodiment of the present invention in a case where a second time period is set.

### Description of Embodiment

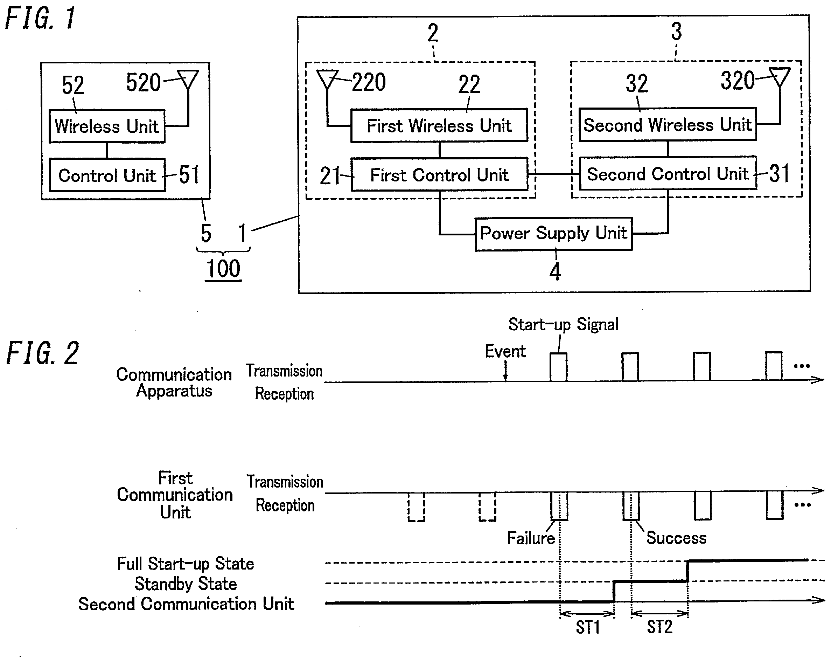

As illustrated in **FIG. 1****,** a communication device **1** of an embodiment of the present invention includes a first communication unit **2** and a second communication unit **3.** The first communication unit **2** includes a first wireless unit **22** configured to transmit and receive a first wireless signal by use of an electric wave as a medium. The second communication unit **3** includes a second wireless unit **32** configured to transmit and receive a second wireless signal by use of an electric wave as a medium. The first communication unit **2** is configured to perform a pre-start-up process to start up at least one of constituents of the second communication unit **3** except the second wireless unit **32** when the first communication unit **2** receives an external signal.

A communication system **100** of the embodiment of the present invention includes the communication device **1** and a communication apparatus **5** configured to wirelessly communicate with the communication device **1.** The communication apparatus **5** has a function of transmitting a start-up signal to the first communication unit **2,** the start-up signal containing a start-up command instructing to start up the second communication unit **3.**

The communication device **1** and the communication system **100** of the present embodiment will be described in detail below. Note that the following configurations are mere examples of the present invention. The present invention is not limited to the following embodiment. Even in configurations other than that illustrated in this embodiment, various modifications may be made depending on design and the like without departing from the technical idea of the present invention.

As illustrated in **FIG. 1****,** the communication system **100** of the present embodiment includes the communication device **1** and the communication apparatus **5.** The communication device **1** wirelessly communicates with the communication apparatus **5.** Examples of the communication system **100** of the present embodiment may include fire-alarm systems. When the communication system **100** is a fire-alarm system, the communication apparatus **5** is a master, and the communication device **1** is a slave. Of course, this example does not intend to limit the communication system **100** of the present embodiment to the fire-alarm system.

As illustrated in **FIG. 1****,** the communication device **1** of the present embodiment includes the first communication unit **2,** the second communication unit **3,** and a power supply unit **4.** The first communication unit **2** includes a first control unit **21** and a first wireless unit **22.** The second communication unit **3** includes a second control unit **31** and a second wireless unit **32.**

The first control unit **21** includes a Central Processing Unit (CPU) and a memory for storing a program. Similarly, the second control unit **31** includes a CPU and a memory for storing a program. Each of the first control unit **21** and the second control unit **31** executes the program stored in the memory by the CPU to execute various processes.

The first wireless unit **22** includes a wireless module compatible with any of communication schemes for a specified small power radio station, a wireless Local Area Network (LAN) and the like, and communication standards such as Bluetooth (registered trademark) and ZigBee (registered trademark). Alternatively or additionally, the first wireless unit **22** includes a wireless module compatible with any of communication schemes for **3**rd Generation (3G), cellular communication and the like, and communication standards such as Long Term Evolution (LTE). The first wireless unit **22** transmits and receives the first wireless signal by use of an electric wave as a medium to and from the communication apparatus **5** via an antenna **220.**

Similarly, the second wireless unit **32** includes a wireless module compatible with any of communication schemes for a specified small power radio station, a wireless LAN and the like, and communication standards such as Bluetooth (registered trademark) and ZigBee (registered trademark). Alternatively or additionally, the second wireless unit **32** includes a wireless module compatible with any of communication schemes for 3G, cellular communication and the like, and communication standards such as LTE. The second wireless unit **32** transmits and receives the second wireless signal by use of an electric wave as a medium to and from the communication apparatus **5** via an antenna **320.** Note that the above-described communication standards are non-limitative examples. The communication scheme or the communication standard of the first wireless unit **22** may be different from, or the same as, that of the second wireless unit **32.**

The first control unit **21** and the second control unit **31** may each include a microcontroller. The first communication unit **2** may include at least one Integrated Circuit (IC) chip embodying at least one of the first control unit **21,** the first wireless unit **22,** and the antenna **220.** Similarly, the second communication unit **3** may include at least one IC chip embodying at least one of the second control unit **31,** the second wireless unit **32,** and the antenna **320.**

Specific examples of the second control unit **31** and the second wireless unit **32** will be described below. First, a description will be given of a case where the second control unit **31** and the second wireless unit **32** are embodied in separate parts. In this case, the second wireless unit **32** includes hardware (or an IC) including an amplifier, a Radio Frequency (RF) signal processing unit, and a Base Band (BB) signal processing unit. The second control unit **31** includes a CPU and a memory. The second control unit **31** is configured to control the second wireless unit **32,** to control other apparatuses (for example, cameras, microphones, loudspeakers, etc.), and to execute application processing.

Next, a description will be given of a case where the second control unit **31** and the second wireless unit **32** are embodied in one chip. In this case, the second wireless unit **32** includes a hardware module configured to perform amplification processing of a signal, a hardware module configured to perform RF signal processing, and a hardware module configured to perform BB signal processing. The second wireless unit **32** may include a software module configured to perform amplification processing of a signal, a software module configured to perform RF signal processing, and a software module configured to perform BB signal processing. The second control unit **31** includes a hardware module (or a software module) configured to control the second wireless unit **32,** to control other apparatuses (for example, cameras, microphones, and loudspeakers, etc.), and to execute application processing.

The power supply unit **4** includes, for example, an IC for power supply into which a power supply circuit is incorporated. The power supply unit **4** is configured to convert power supplied from a power supply such as a primary battery or a secondary battery to supply operating power to the first communication unit **2** and the second communication unit **3.** In the communication device **1** of the present embodiment, the power supply unit **4** is configured to supply the operating power to the first communication unit **2** but not supply the operating power to the second communication unit **3** during ordinary operation. The power supply unit **4** is configured to supply the operating power to the second communication unit **3** when the power supply unit **4** receives a pre-start-up command from the first communication unit **2,** which will be described later.

As illustrated in **FIG. 1****,** the communication apparatus **5** includes a control unit **51** and a wireless unit **52.** Similarly to the first control unit **21** and the second control unit **31,** the control unit **51** includes a CPU and a memory for storing a program. The control unit **51** executes the program stored in the memory by the CPU to execute various processes.

Similarly to the first wireless unit **22** and the second wireless unit **32,** the wireless unit **52** includes a wireless module compatible with any of communication schemes for a specified small power radio station, a wireless LAN and the like, and communication standards such as Bluetooth (registered trademark) and ZigBee (registered trademark). Alternatively or additionally, the wireless unit **52** includes a wireless module compatible with any of communication schemes for 3G, cellular communication and the like, and communication standards such as LTE. The wireless unit **52** has a function of transmitting and receiving the first wireless signal to and from the first wireless unit **22** via the antenna **520** and a function of transmitting and receiving the second wireless signal to and from the second wireless unit **32** via the antenna **520.** That is, the communication apparatus **5** is configured to be capable of wirelessly communicating with both the first communication unit **2** and the second communication unit **3.**

The control unit **51** may include a microcontroller. The communication apparatus **5** may include at least one IC chip embodying at least one of the control unit **51** and the wireless unit **52.** The antenna **520** may include a single antenna or may include two antennas. When the antenna **520** includes two antennas, one of the antennas may be used for wireless communication with the first wireless unit **22,** and the other of the antennas may be used for wireless communication with the second wireless unit **32.**

In the communication system **100** of the present embodiment, the control unit **51** generates a start-up signal containing a command instructing to start up the second communication unit **3** (hereinafter referred to as a "start-up command") when an event (for example, fire) occurs. Then, the control unit **51** transmits the start-up signal to the first communication unit **2** via the wireless unit **52.** That is, the communication apparatus **5** has a function of transmitting a start-up signal to the first communication unit **2,** the start-up signal containing a command instructing to start up the second communication unit **3.**

In the communication device **1** of the present embodiment, the first communication unit **2** and the second communication unit **3** are used for different purposes. For example, the first communication unit **2** is used to transmit and receive data to and from the communication apparatus **5,** the data containing a small amount of information such as control data of an apparatus and/or sensed data of a sensor. For example, the second communication unit **3** is used to transmit and receive data containing a large amount of information such as still images and moving images. For such applications, the first communication unit **2** uses a signal having a lower frequency band and a narrower bandwidth than a signal used by the second communication unit **3.** In other words, the second communication unit **3** uses a signal having a higher frequency band and a broader bandwidth than a signal used by the first communication unit **2.** The first communication unit **2** may have less transmission power as compared to the second communication unit **3,** and therefore, the first communication unit **2** consumes less power than the second communication unit **3.** In other words, the transmission power of the second communication unit **3** is higher than that of the first communication unit **2,** and the second communication unit **3** has to transmit and receive a broadband signal, and therefore, the second communication unit **3** consumes more power than the first communication unit **2.** That is, it is not preferable that the second communication unit **3** is constantly active, because this may lead to an increase in power consumption.

Therefore, the communication device **1** of the present embodiment is configured not to start up the second communication unit **3** during ordinary operation in which no event occurs, and to start up the second communication unit **3** only when needed. That is, the communication device **1** of the present embodiment avoids unnecessarily starting up the second communication unit **3,** thereby reducing power consumption.

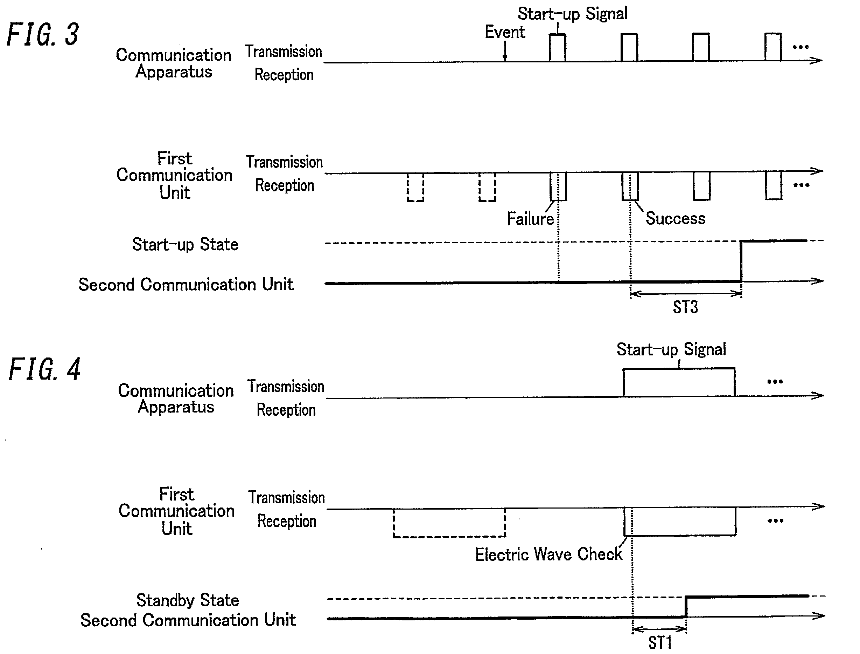

An example of the operation of the communication device **1** of the present embodiment will be described below with reference to **FIG. 2****.** In a receiving waveform of the first communication unit **2** shown in **FIG. 2****,** broken lines represent a state in which the first communication unit **2** waits for a signal, and solid lines represent a state in which the first communication unit **2** receives a signal. The same way of representation is used in **FIGS. 3** to **6****.**

During ordinary operation, the first communication unit **2** operates in an intermittent reception mode. That is, the first communication unit **2** (the first control unit **21)** executes control so as to repeat a process of measuring a definite time period by using a built-in timer, and to stop operation of the first wireless unit **22** during the process of measuring the definite time period, and to start up the first wireless unit **22** when the process of measuring the definite time period is completed. In this way, the first communication unit **2** intermittently waits for a signal provided from an external apparatus (in this embodiment, the communication apparatus **5).** Here, the power supply unit **4** does not supply operating power to the second communication unit **3,** and therefore, the second communication unit **3** is not active.

Here, it is assumed that any event occurs, and wireless communication with the second communication unit **3** has to be performed. In this case, the control unit **51** of the communication apparatus **5** generates a start-up signal. Then, the control unit **51** transmits the start-up signal to the first communication unit **2** via the wireless unit **52.** Thereafter, the control unit **51** continues a process of transmitting the start-up signal via the wireless unit **52** at regular intervals until the control unit **51** receives a response signal from the second communication unit **3** or until the number of transmissions of the start-up signal reaches a predetermined number of times.

When the first wireless unit **22** receives an external signal (here, the start-up signal), the first control unit **21** generates a command instructing to supply operating power to the second wireless unit **32** (hereinafter referred to as a "pre-start-up command"). Then, the first control unit **21** gives the pre-start-up command to the power supply unit **4.** When the power supply unit **4** receives the pre-start-up command, the power supply unit **4** starts supplying the operating power to the second communication unit **3.**

When the second communication unit **3** is supplied with the operating power, the second control unit **31** executes an initialization process, so that the second communication unit **3** transitions to a standby state (see **FIG. 2**)**.** Examples of the initialization process include: a process in which the second control unit **31** executes various settings required for using the second communication unit **3;** a process in which the second control unit **31** resets a Random Access Memory (RAM); and a process of checking peripheral hardware. Of course, the initialization process is not limited to including these processes. That is, the first communication unit **2** is configured to perform a pre-start-up process to start up at least one (here, the second control unit **31**) of constituents of the second communication unit **3** except the second wireless unit **32** when the first communication unit **2** receives an external signal. The pre-start-up process takes a definite time **ST1** as illustrated in **FIG. 2****.** The definite time **ST1** is hereinafter referred to as a "pre-start-up time **ST1".**

Then, the first control unit **21** analyses the payload (data) of the signal received by the first wireless unit **22.** As a result of the analysis, when the received signal contains the start-up command (that is, when the first control unit **21** successfully acquires the start-up command), the first control unit **21** generates a command instructing to start up the second wireless unit **32** (hereinafter referred to as a "full start-up command"). Then, the first control unit **21** gives the full start-up command to the second control unit **31.** When the second control unit **31** receives the full start-up command, the second control unit **31** starts up the second wireless unit **32,** so that the second communication unit **3** transitions to a full start-up state (see **FIG. 2****).**

That is, the first communication unit **2** is configured to give the full start-up command to the second communication unit **3** when the start-up command instructing to start up the second communication unit **3** is contained in the external signal. Then, the second communication unit **3** is configured to start up the second wireless unit **32** when the second communication unit **3** receives the full start-up command. Staring up the second wireless unit **32** is hereinafter referred to as "full start-up". The full start-up takes a definite time **ST2** as illustrated in **FIG. 2****.** The definite time **ST2** is hereinafter referred to as "full start-up time **ST2".**

Note that as a result of the analysis, when the start-up command is not contained in the received signal, or the first control unit **21** fails to acquire the start-up command, the first control unit **21** continues waiting for the start-up command. Then, at a time point at which the first control unit **21** acquires the start-up command from the signal received by the first wireless unit **22,** the first control unit **21** gives the full start-up command to the second control unit **31.**

When the second wireless unit **32** is started up, the second control unit **31** transmits a response signal to the communication apparatus **5** via the second wireless unit **32.** In the communication apparatus **5,** when the wireless unit **52** receives the response signal from the second communication unit **3,** the control unit **51** starts wireless communication with the second communication unit **3.** Here, the communication apparatus **5** may continue wirelessly communicating with the first communication unit **2.**

Here, in a conventional communication device, as illustrated in **FIG. 3****,** the first communication unit **2** is configured to analyze data contained in a start-up signal, and to start up the second communication unit **3** after the first communication unit **2** successfully acquires the start-up command. Note that the "start-up state" in **FIG. 3** is a state in which the second communication unit **3** is started up, wherein not only the second control unit **31** but also the second wireless unit **32** is started up. Therefore, in the conventional communication device, for example, when the first communication unit **2** fails to acquire the start-up command at a first-time reception of the start-up signal, the first communication unit **2** does not start up the second communication unit **3.** In the conventional communication device, when the first communication unit **2** successfully acquires the start-up command at the next reception of the start-up signal, the first communication unit **2** starts up the second communication unit **3.**

That is, in the communication device **1** of the present embodiment, the full start time **ST2** is time from a time point at which the start-up command is successfully acquired until the second communication unit **3** transitions to the full start-up state. On the other hand, in the conventional communication device, a time **ST3** from a time point at which the start-up command is successfully acquired until the second communication unit **3** transitions to the start-up state is equal to a sum of the pre-start-up time **ST1** and the full start time **ST2.** Therefore, in the communication device **1** of the present embodiment, when the acquisition of the start-up command fails at a first-time reception of the start-up signal, time required for a transition of the second communication unit **3** to the full start-up state is reduced by the pre-start-up time **ST1** as compared to the conventional communication device.

As described above, in the communication device **1** of the present embodiment, the first communication unit **2** is configured to perform the pre-start-up process when the first communication unit **2** receives a signal (here, the start-up signal) from an external apparatus (here, the communication apparatus **5).** Therefore, in the communication device **1** of the present embodiment, even when the first communication unit **2** fails to acquire the start-up command at a first-time reception of the start-up signal, pre-starting the second communication unit **3** allows the second communication unit **3** to be fully started up as soon as the first communication unit **2** successfully acquires the start-up command at the next reception of the start-up signal. Therefore, the communication device **1** of the present embodiment can reduce time required for starting up the second communication unit **3** as compared to the conventional communication device.

The communication device **1** of the present embodiment is configured not to fully start up the second communication unit **3,** even when the communication device **1** receives an external signal, until the communication device **1** acquires the start-up command. Therefore, in the communication device **1** of the present embodiment, the second wireless unit **32** of high power consumption is not started up until the communication device **1** acquires the start-up command. This can reduce the power consumption.

In the communication device **1** of the present embodiment, the first communication unit **2** uses the reception of an external signal as a trigger to pre-start up the second communication unit **3.** However, other configuration may be possible. For example, the first communication unit **2** may be configured to perform an electric wave check when the first communication unit **2** receives an external signal, and the first communication unit **2** may be configured to perform the pre-start-up process when the level of the external signal exceeds a predetermined threshold value. With this configuration, it is possible to suppress the pre-start-up process of the second communication unit 3 from being triggered by the reception of a low-level weak signal such as noise.

The electric wave check is performed by the first control unit **21** based on a Receiving Signal Strength Indication signal (RSSI signal) output from the first wireless unit **22.** The RSSI signal has direct current voltage proportional to the receiving signal strength of a signal received by the first wireless unit **22.** The first control unit **21** preferably executes the electric wave check as soon as the first wireless unit **22** starts receiving an external signal (here, the start-up signal) as illustrated in **FIG. 4****.**

The second communication unit **3** may be configured to stop its operation after a predetermined time has elapsed from completion of the pre-start-up process without the second communication unit **3** receiving the full start-up command. Specifically, when the pre-start-up process is completed, the second control unit **31** starts to measure a predetermined time by using a built-in timer. When the second control unit **31** does not receive the full start-up command until the predetermined time has elapsed from completion of the pre-start-up process, the second control unit **31** stops its operation. With this configuration, it is possible to avoid an undesirable situation where the second communication unit **3** is unnecessarily kept in its pre-start-up state until receiving the start-up signal when the pre-start-up process of the second communication unit **3** is caused by a signal other than the start-up signal as a trigger. Of course, when the second control unit **31** receives the full start-up command while measuring the predetermined time, the second control unit **31** starts up the second wireless unit **32.**

In the communication device **1** of the present embodiment, as previously described, the first communication unit **2** intermittently waits for a signal provided from an external apparatus (here, the communication apparatus **5).** Therefore, in the communication device **1** of the present embodiment, a time period for receiving a signal is further limited as compared to a case where a signal is constantly waited. Thus, the communication device **1** less likely to receive noise, thereby reducing the possibility of erroneous operation. It is optional whether or not this configuration is adopted.

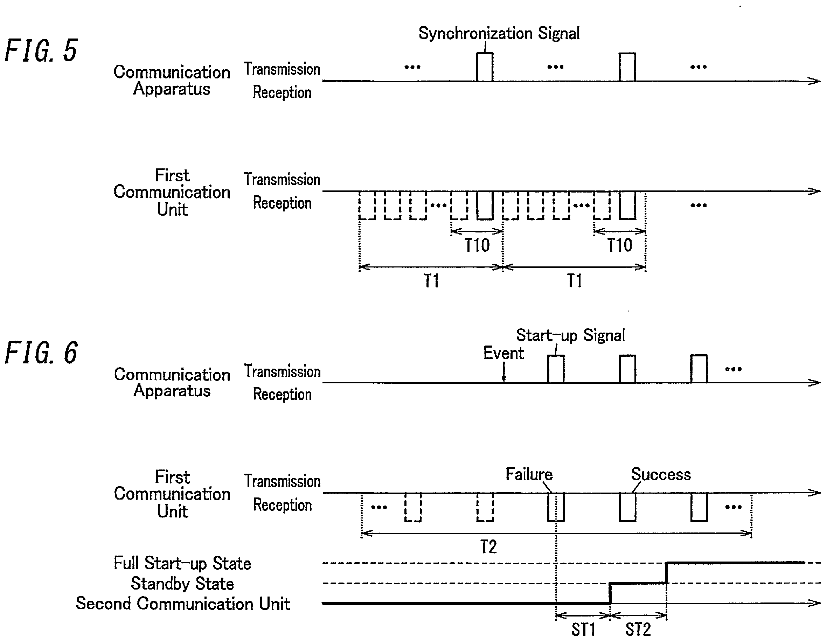

As illustrated in **FIG. 5****,** the first communication unit **2** may be configured not to perform the pre-start-up process when receiving an external signal within a first time period **T10.** For example, when the time period during which the first communication unit **2** waits for a signal is divided into regular time slots **T1** (for example, 10 minutes), last one minute of each time slot **T1** may be set to the first time period **T10.** Examples of the first time period **T10** include a time period during which a synchronization signal containing a command instructing to recover from loss of synchronization with an external apparatus (here, communication apparatus **5**)**.**

Specifically, as illustrated in **FIG. 5****,** the control unit **51** of the communication apparatus **5** periodically transmits a synchronization signal to the first communication unit **2** via the wireless unit **52.** When the first wireless unit **22** receives the synchronization signal, the first control unit **21** sets, based on the synchronization signal, intervals at which the first wireless unit **22** is started up. In this way, the first wireless unit **22** is started up in synchronization with a timing at which the communication apparatus **5** transmits any signal. Therefore, it is possible to increase the probability of receiving a signal from the communication apparatus **5.** The synchronization signal is unnecessary for the second communication unit **3.** Therefore, in the first time period **T10** in which the synchronization signal is expected to be transmitted from the communication apparatus **5,** the first communication unit **2** preferably does not perform the pre-start-up process even when the first communication unit **2** receives an external signal.

With this configuration, it is possible to suppress the pre-start-up process of the second communication unit **3** from being caused by a signal unnecessary for the second communication unit **3** as a trigger. Of course, also during the first time period **T10,** when the first communication unit **2** receives the start-up signal and successfully acquires the start-up command, the first communication unit **2** performs the pre-start-up process and the full start-up process.

As illustrated in **FIG. 6****,** the first communication unit **2** may be configured to give the full start-up command to the second communication unit **3** when receiving an external signal within the second time period **T2.** The second communication unit **3** may be configured to start up the second wireless unit **32** when the second communication unit **3** receives the full start-up command. With this configuration, since the second communication unit **3** is fully started up at a time point at which the first communication unit **2** receives the external signal, it becomes possible to immediately perform wireless communication using the second communication unit **3.** Note that the second time period **T2** is a preset time period. For example, when the communication device **1** is installed in a dwelling unit, the second time period **T2** is preferably set to a time period during which residents are assumed to be in the dwelling unit (for example, during nighttime).

Alternatively, the second time period **T2** may not be set but the second communication unit 3 may be fully started up at a time point at which the first communication unit **2** receives an external signal. In other words, the second communication unit **3** may be configured to start up the second wireless unit **32** when the second communication unit **3** is pre-started. Also with this configuration, since the second communication unit **3** is fully started up at a time point at which the first communication unit **2** receives the external signal, it becomes possible to immediately perform wireless communication using the second communication unit **3.**

In the communication device **1** of the present embodiment, the specification of wireless communication (for example, a frequency band used for the wireless communication) of the first communication unit **2** is different from that of the second communication unit **3,** but such a configuration is a non-limitative example. For example, the specification of wireless communication of the first communication unit **2** may be the same as that of the second communication unit **3.** Also in this case, the first wireless unit **22** waits for an external signal, and the second communication unit **3** is started up as necessary, thereby reducing power consumption.

In the communication device **1** of the present embodiment, when a signal received by the first wireless unit **22** contains the start-up command, the first control unit **21** gives the full start-up command to the second control unit **31,** and the second control unit **31** starts up the second wireless unit **32.** However, other configurations may be possible. For example, the communication device **1** of the present embodiment may be configured such that in the pre-start-up process, the second control unit **31** deactivates one or more or all of functions of the second wireless unit **32,** and when the second control unit **31** receives the full start-up command, the second control unit **31** reactivates the functions.

Alternatively, the communication device **1** of the present embodiment may be configured such that the second control unit **31** and the second wireless unit **32** are separated from each other, and the power supply unit **4** supplies operating power to each of the second control unit **31** and the second wireless unit **32.** With this configuration, in the pre-start-up process, the first control unit **21** may give the pre-start-up command to the power supply unit **4,** and the power supply unit **4** may start supplying the operating power to the second control unit **31.** Moreover, when a signal received by the first wireless unit **22** contains the start-up command, the first control unit **21** may give the full start-up command to the power supply unit **4,** and the power supply unit **4** may start supplying the operating power to the second wireless unit **32.**

In all of the configurations described above, power consumption due to transmission and reception processing of a wireless signal by the second wireless unit **32** is avoided, thereby reducing power consumption.

As described above, the communication device **1** of the present embodiment has the following first feature.

According to the first feature, the communication device **1** includes the first communication unit **2** and the second communication unit **3.** The first communication unit **2** includes the first wireless unit **22** configured to transmit and receive a first wireless signal by use of an electric wave as a medium. The second communication unit **3** includes the second wireless unit **32** configured to transmit and receive a second wireless signal by use of an electric wave as a medium. The first communication unit **2** is configured to perform a pre-start-up process to start up at least one of constituents of the second communication unit **3** except the second wireless unit **32** when the first communication unit **2** receives an external signal.

In addition to the first feature, the communication device **1** of the present embodiment may further include the following second feature.

According to the second feature, the first communication unit **2** is configured to give a full start-up command to the second communication unit **3** when a start-up command instructing to start up the second communication unit **3** is contained in the external signal. The second communication unit **3** is configured to start up the second wireless unit **32** when the second communication unit **3** receives the full start-up command.

In other words, according to the second feature, the first communication unit **2** is configured to give the full start-up command to the second communication unit **3** when the first communication unit **2** successfully acquires the start-up command contained in the external signal and instructing to start up the second communication unit **3.** The second communication unit **3** is configured to start up the second wireless unit **32** when the second communication unit **3** receives the full start-up command.

In addition to the second feature, the communication device **1** of the present embodiment may have the following third feature.

According to the third feature, the second communication unit **3** is configured to stop its operation after a predetermined time has elapsed from completion of the pre-start-up process without the second communication unit **3** not receiving the full start-up command.

In addition to one or more of the first to third features, the communication device **1** of the present embodiment may have the following fourth feature.

According to the fourth feature, the first communication unit **2** is configured to perform an electric wave check when the first communication unit **2** receives the external signal, and the first communication unit **2** is configured to perform the pre-start-up process when the level of the external signal exceeds a predetermined threshold value.

In other words, according to the fourth feature, the first communication unit **2** is configured to perform an electric wave check when the first communication unit **2** receives the external signal and the first communication unit **2** is configured to perform the pre-start-up process when the level of the external signal exceeds a predetermined threshold value and not to perform the pre-start-up process when the level is lower than or equal to the threshold value.

In addition to one or more of the first to fourth features, the communication device **1** of the present embodiment may further have the following fifth feature.

According to the fifth feature, the first communication unit **2** is configured to repeat a process of measuring a definite time period, and the first communication unit **2** is configured to stop operation of the first wireless unit **22** during the process of measuring the definite time period and to start up the first wireless unit **22** when the process of measuring the definite time period is completed.

In addition to one or more of the first to fifth features, the communication device **1** of the present embodiment may further include the following sixth feature.

According to the sixth feature, the first communication unit **2** is configured not to perform the pre-start-up process when receiving the external signal within a first time period **T10.**

In addition to the sixth feature, the communication device **1** of the present embodiment may further include the following seventh feature.

According to the seventh feature, the first time period **T10** is a time period for waiting for a synchronization signal containing a command instructing to recover from loss of synchronization with an external apparatus.

In addition to one or more of the first to seventh features, the communication device **1** of the present embodiment may further include the following eighth feature.

According to the eighth feature, the first communication unit **2** is configured to give the full start-up command to the second communication unit **3** when receiving the external signal within a second time period **T2.** The second communication unit **3** is configured to start up the second wireless unit **32** when the second communication unit **3** receives the full start-up command,

In other words, according to the eighth feature, the first communication unit **2** is configured to give the full start-up command to the second communication unit **3** when receiving the external signal within a preset second time period **T2.** The second communication unit **3** is configured to start up the second wireless unit **32** when the second communication unit **3** receives the full start-up command.

In addition to the first feature, the communication device **1** of the present embodiment may further include the following ninth feature.

According to the ninth feature, the second communication unit **3** is configured to start up the second wireless unit **32** in response to completion of the pre-start-up process.

In addition to one or more of the first to ninth features, the communication device **1** of the present embodiment may have the following tenth feature.

According to the tenth feature, the communication device **1** further includes a power supply unit **4** configured to supply operating power to the first communication unit **2** and the second communication unit **3.** The first communication unit **2** is configured to give a command (pre-start-up command) to the power supply unit **4** to supply the operating power from the power supply unit **4** to at least one (here, a second control unit **31**) of constituents of the second communication unit **3** except the second wireless unit **32** to thereby perform the pre-start-up process.

In addition to the first feature, the communication device **1** of the present embodiment may further include the following eleventh feature.

According to the eleventh feature, the communication device **1** further includes the power supply unit **4** configured to supply operating power to the first communication unit **2** and the second communication unit **3.** Moreover, the first communication unit **2** further includes the first control unit **21** configured to control the first wireless unit **22.** Moreover, the second communication unit **3** further includes the second control unit **31** configured to control the second wireless unit **32.** The first control unit **21** is configured to give a command (pre-start-up command) to the power supply unit **4** to supply the operating power from the power supply unit **4** to the second control unit **31** to thereby perform the pre-start-up process.

In addition to the eleventh feature, the communication device **1** of the present embodiment may further include the following twelfth feature.

According to the twelfth feature, the first control unit **21** is configured to give a full start-up command to a power supply unit **4** when the first control unit **21** successfully acquires a start-up command contained in the external signal and instructing to start up the second communication unit **3.** The power supply unit **4** is configured to supply operating power to the second wireless unit **32** to thereby start up the second wireless unit **32** when the power supply unit **4** receives the full start-up command.

The communication system **100** of the present embodiment has the following thirteenth feature.

According to the thirteenth feature, the communication system **100** includes the communication device **1** having one or more of the first to twelfth features, and a communication apparatus **5** configured to wirelessly communicate with the communication device **1.** The communication apparatus **5** has a function of transmitting a start-up signal to the first communication unit **2,** the start-up signal containing a start-up command instructing to start up the second communication unit **3.**

According to the communication device **1** and the communication system **100** of the present embodiment, even when the acquisition of the start-up command fails at a first-time reception of the start-up signal, pre-starting the second communication unit **3** allows the second communication unit **3** to be fully started up as soon as the start-up command at the next reception of the start-up signal is successfully acquired. Therefore, the communication device **1** and the communication system **100** of the present embodiment can reduce time required for starting up the second communication unit **3** as compared to conventional communication devices.

The communication device **1** of the present embodiment can be realized by allowing a computer including a CPU and a memory to execute a program. The program may be stored in the memory of the computer in advance, provided via an electric communication line, or provided by a recording medium recording the program.

The program allows the computer to function at least as the first communication unit **2** and the second communication unit **3.** The first communication unit **2** includes the first wireless unit **22** configured to transmit and receive a first wireless signal by use of an electric wave as a medium. The second communication unit **3** includes the second wireless unit **32** configured to transmit and receive a second wireless signal by use of an electric wave as a medium. When the first communication unit **2** receives an external signal with the second communication unit **3** not having been started up, the first communication unit **2** performs a pre-start-up process to start up at least one of constituents of the second communication unit **3** except the second wireless unit **32.** The program may be capable of realizing the communication device **1** having one or more of the second to twelfth features.

The communication device **1** of the present embodiment is started up according to the following method for starting up the communication device 1. That is, the method for starting up the communication device **1** includes performing a pre-start-up process by the first communication unit **2** in the communication device **1** including the first communication unit **2** and the second communication unit **3.** The first communication unit **2** includes the first wireless unit **22** configured to transmit and receive a first wireless signal by use of an electric wave as a medium. The second communication unit **3** includes the second wireless unit **32** configured to transmit and receive a second wireless signal by use of an electric wave as a medium. The pre-start-up process is a process in which when the first communication unit **2** receives an external signal with the second communication unit **3** not having been started up, the first communication unit **2** starts up at least one of constituents of the second communication unit **3** except the second wireless unit **32.** The method for starting up the communication device **1** may be for starting the communication device **1** having one or more of the first to twelfth features.

## Claims

1. A communication device (1), comprising:
a first communication unit (2) including a first wireless unit (22) configured to transmit and receive a first wireless signal by use of an electric wave as a medium; and
a second communication unit (3) including a second wireless unit (32) configured to transmit and receive a second wireless signal by use of an electric wave as a medium,
the first communication unit (2) being configured to perform a pre-start-up process, in which at least one of constituents of the second communication unit (3) except the second wireless unit (32) is started up, when the first communication unit (2) receives an external signal from an external apparatus with the second communication unit (3) not having been started up, wherein:
the first communication unit (2) is configured to give a full start-up command to the second communication unit (3) when the first communication unit (2) acquires a start-up command contained in an external signal from the external apparatus and instructing to start up the second communication unit (3); and
the second communication unit (3) is configured to start up the second wireless unit (32) when the second communication unit receives the full start-up command.

2. The communication device (1) according to claim 1, wherein
the second communication unit (3) is configured to stop its operation after a predetermined time has elapsed from completion of the pre-start-up process without the second communication unit (3) receiving the full start-up command.

3. The communication device (1) according to any one of claims 1 to 2, wherein:
the first communication unit (2) is configured to perform an electric wave check when the first communication unit (2) receives the external signal; and
the first communication unit (2) is configured to perform the pre-start-up process when a level of the external signal exceeds a predetermined threshold value and not to perform the pre-start-up process when the level is lower than or equal to the threshold value.

4. The communication device (1) according to any one of claims 1 to 3, wherein
the first communication unit (2) is configured to repeat a process of measuring a definite time period, and the first communication unit (2) is configured to stop operation of the first wireless unit (22) during the process of measuring the definite time period and to start up the first wireless unit (22) when the process of measuring the definite time period is completed.

5. The communication device (1) according to any one of claims 1 to 4, wherein
the first communication unit (2) is configured not to perform the pre-start-up process when receiving the external signal within a first time period.

6. The communication device (1) according to claim 5, wherein
the first time period (T10) is a time period for waiting for a synchronization signal containing a command instructing to recover from loss of synchronization with the external apparatus.

7. The communication device (1) according to any one of claims 1 to 6, wherein:
the first communication unit (2) is configured to give a full start-up command to the second communication unit (3) when receiving the external signal within a preset second time period (T2).

8. The communication device (1) according to any one of claims 1 to 7, further comprising a power supply unit (4) configured to supply operating power to the first communication unit (2) and the second communication unit (3),
wherein the first communication unit (2) is configured to give a command to the power supply unit to allow the power supply unit (4) to supply the operating power to at least one of constituents of the second communication unit (3) except the second wireless unit (32) to thereby perform the pre-start-up process.

9. The communication device (1) according to claim 1, further comprising a power supply unit (4) configured to supply operating power to the first communication unit (2) and the second communication unit (3), wherein:
the first communication unit (2) further includes a first control unit (21) configured to control the first wireless unit (22);
the second communication unit (3) further includes a second control unit (31) configured to control the second wireless unit (32); and
the first control unit (21) is configured to give a command to the power supply unit (4) to allow the power supply unit (4) to supply the operating power to the second control unit (31) to thereby perform the pre-start-up process.

10. The communication device (1) according to claim 9, wherein:
the power supply unit (4) is configured to supply the operating power to the second wireless unit (32) to thereby start up the second wireless unit (32) when the power supply unit (4) receives the full start-up command.

11. A communication system (100) comprising a communication device (1) according to any one of claims 1 to 10 and an external apparatus,
wherein the external apparatus is a communication apparatus (5) configured to wirelessly communicate with the communication device (1).

## Patentansprüche

1. Kommunikationsvorrichtung (1), umfassend:
eine erste Kommunikationseinheit (2), die eine erste Drahtloseinheit (22) enthält, die konfiguriert ist, um ein erstes drahtloses Signal unter Verwendung einer elektrischen Welle als Medium zu senden und zu empfangen; und
eine zweite Kommunikationseinheit (3) mit einer zweiten Drahtloseinheit (32), die konfiguriert ist, um ein zweites drahtloses Signal unter Verwendung einer elektrischen Welle als Medium zu senden und zu empfangen,
wobei die erste Kommunikationseinheit (2) konfiguriert ist, um einen Voranlaufvorgang durchzuführen, bei dem mindestens eine von Komponenten der zweiten Kommunikationseinheit (3) mit Ausnahme der zweiten Drahtloseinheit (32) angelaufen gelassen wird, wenn die erste Kommunikationseinheit (2) ein externes Signal von einer externen Vorrichtung empfängt, wobei die zweite Kommunikationseinheit (3) nicht angelaufen gelassen ist, wobei:
die erste Kommunikationseinheit (2) konfiguriert ist, um der zweiten Kommunikationseinheit (3) einen vollständigen Anlaufbefehl zu erteilen, wenn die erste Kommunikationseinheit (2) einen Anlaufbefehl erhält, der in einem externen Signal von der externen Vorrichtung enthalten ist und die Anweisung erteilt, die zweite Kommunikationseinheit (3) anlaufen zu lassen; und
die zweite Kommunikationseinheit (3) konfiguriert ist, um die zweite Drahtloseinheit (32) anlaufen zu lassen, wenn die zweite Kommunikationseinheit den vollständigen Anlaufbefehl empfängt.

2. Kommunikationsvorrichtung (1) nach Anspruch 1, wobei
die zweite Kommunikationseinheit (3) konfiguriert ist, um ihren Betrieb nach Ablauf einer vorbestimmten Zeit nach Vollendung des Voranlaufvorgangs anzuhalten, ohne dass die zweite Kommunikationseinheit (3) den vollständigen Anlaufbefehl empfängt.

3. Kommunikationsvorrichtung (1) nach einem der Ansprüche 1 bis 2, wobei:
die erste Kommunikationseinheit (2) konfiguriert ist, um eine elektrische Wellenprüfung durchzuführen, wenn die erste Kommunikationseinheit (2) das externe Signal empfängt; und
die erste Kommunikationseinheit (2) konfiguriert ist, um den Voranlaufvorgang durchzuführen, wenn ein Pegel des externen Signals einen vorbestimmten Schwellenwert überschreitet, und um den Voranlaufvorgang nicht durchzuführen, wenn der Pegel kleiner gleich dem Schwellenwert ist.

4. Kommunikationsvorrichtung (1) nach einem der Ansprüche 1 bis 3, wobei
die erste Kommunikationseinheit (2) konfiguriert ist, um einen Vorgang zum Messen einer bestimmten Zeitspanne zu wiederholen, und die erste Kommunikationseinheit (2) konfiguriert ist, um den Betrieb der ersten Drahtloseinheit (22) während des Vorgangs zum Messen der bestimmten Zeitspanne anzuhalten und die erste Drahtloseinheit (22) anlaufen zu lassen, wenn der Vorgang zum Messen der bestimmten Zeitspanne vollendet ist.

5. Kommunikationsvorrichtung (1) nach einem der Ansprüche 1 bis 4, wobei
die erste Kommunikationseinheit (2) konfiguriert ist, um den Voranlaufvorgang nicht durchzuführen, wenn sie das externe Signal innerhalb einer ersten Zeitspanne empfängt.

6. Kommunikationsvorrichtung (1) nach Anspruch 5, wobei
die erste Zeitspanne (T10) eine Zeitspanne zum Warten auf ein Synchronisationssignal ist, das einen Befehl enthält, der nach einem Verlust der Synchronisation mit der externen Vorrichtung eine Wiederherstellung anordnet.

7. Kommunikationsvorrichtung (1) nach einem der Ansprüche 1 bis 6, wobei:
die erste Kommunikationseinheit (2) konfiguriert ist, um der zweiten Kommunikationseinheit (3) einen vollständigen Anlaufbefehl zu erteilen, wenn sie das externe Signal innerhalb einer vorgegebenen zweiten Zeitspanne (T2) empfängt.

8. Kommunikationsvorrichtung (1) nach einem der Ansprüche 1 bis 7, ferner eine Stromversorgungseinheit (4) umfassend, die konfiguriert ist, um der ersten Kommunikationseinheit (2) und der zweiten Kommunikationseinheit (3) Betriebsstrom zuzuführen,
wobei die erste Kommunikationseinheit (2) konfiguriert ist, um der Stromversorgungseinheit einen Befehl zu erteilen, um der Stromversorgungseinheit (4) zu erlauben, den Betriebsstrom mindestens einer von Komponenten der zweiten Kommunikationseinheit (3) mit Ausnahme der zweiten Drahtloseinheit (32) zuzuführen, um dadurch den Voranlaufvorgang durchzuführen.

9. Kommunikationsvorrichtung (1) nach Anspruch 1, ferner eine Stromversorgungseinheit (4) umfassend, die konfiguriert ist, um der ersten Kommunikationseinheit (2) und der zweiten Kommunikationseinheit (3) Betriebsstrom zuzuführen, wobei:
die erste Kommunikationseinheit (2) ferner eine erste Steuereinheit (21) enthält, die konfiguriert ist, um die erste Drahtloseinheit (22) zu steuern;
die zweite Kommunikationseinheit (3) ferner eine zweite Steuereinheit (31) enthält, die konfiguriert ist, um die zweite Drahtloseinheit (32) zu steuern; und
die erste Steuereinheit (21) konfiguriert ist, um der Stromversorgungseinheit (4) einen Befehl zu erteilen, um der Stromversorgungseinheit (4) zu erlauben, den Betriebsstrom der zweiten Steuereinheit (31) zuzuführen, um dadurch den Voranlaufvorgang durchzuführen.

10. Kommunikationsvorrichtung (1) nach Anspruch 9, wobei:
die Stromversorgungseinheit (4) konfiguriert ist, um den Betriebsstrom der zweiten Drahtloseinheit (32) zuzuführen, um dadurch die zweite Drahtloseinheit (32) anlaufen zu lassen, wenn die Stromversorgungseinheit (4) den vollständigen Anlaufbefehl empfängt.

11. Kommunikationssystem (100), umfassend eine Kommunikationsvorrichtung (1) nach einem der Ansprüche 1 bis 10 und eine externe Vorrichtung,
wobei die externe Vorrichtung eine Kommunikationsvorrichtung (5) ist, die konfiguriert ist, um drahtlos mit der Kommunikationsvorrichtung (1) zu kommunizieren.

## Revendications

1. Dispositif de communication (1), comprenant :
une première unité de communication (2) incluant une première unité sans fil (22) configurée de manière à émettre et recevoir un premier signal sans fil en utilisant une onde électrique en tant que milieu porteur ; et
une seconde unité de communication (3) incluant une seconde unité sans fil (32) configurée de manière à émettre et recevoir un second signal sans fil en utilisant une onde électrique en tant que milieu porteur ;
la première unité de communication (2) étant configurée de manière à mettre en oeuvre un processus de démarrage préalable, dans lequel au moins l'un des constituants de la seconde unité de communication (3), à l'exception de la seconde unité sans fil (32), est démarré, lorsque la première unité de communication (2) reçoit un signal externe en provenance d'un appareil externe, dans lequel la seconde unité de communication (3) n'a pas été démarrée, dans lequel :
la première unité de communication (2) est configurée de manière à transmettre une commande de démarrage complet à la seconde unité de communication (3) lorsque la première unité de communication (2) acquiert une commande de démarrage contenue dans un signal externe en provenance de l'appareil externe et donnant instruction de démarrer la seconde unité de communication (3) ; et
la seconde unité de communication (3) est configurée de manière à démarrer la seconde unité sans fil (32) lorsque la seconde unité de communication reçoit la commande de démarrage complet.

2. Dispositif de communication (1) selon la revendication 1, dans lequel :
la seconde unité de communication (3) est configurée de manière à interrompre son fonctionnement après qu'un temps prédéterminé s'est écoulé depuis l'achèvement du processus de démarrage préalable sans que la seconde unité de communication (3) ne reçoive la commande de démarrage complet.

3. Dispositif de communication (1) selon l'une quelconque des revendications 1 à 2, dans lequel :
la première unité de communication (2) est configurée de manière à mettre en oeuvre un contrôle d'onde électrique lorsque la première unité de communication (2) reçoit le signal externe ; et
la première unité de communication (2) est configurée de manière à mettre en oeuvre le processus de démarrage préalable lorsqu'un niveau du signal externe dépasse une valeur de seuil prédéterminée, et à ne pas mettre en oeuvre le processus de démarrage préalable lorsque le niveau est inférieur ou égal à la valeur de seuil.

4. Dispositif de communication (1) selon l'une quelconque des revendications 1 à 3, dans lequel :
la première unité de communication (2) est configurée de manière à répéter un processus de mesure d'une période de temps définie, et la première unité de communication (2) est configurée de manière à interrompre le fonctionnement de la première unité sans fil (22) pendant le processus de mesure de la période de temps définie, et à démarrer la première unité sans fil (22) lorsque le processus de mesure de la période de temps définie est achevé.

5. Dispositif de communication (1) selon l'une quelconque des revendications 1 à 4, dans lequel :
la première unité de communication (2) est configurée de manière à ne pas mettre en oeuvre le processus de démarrage préalable lors de la réception du signal externe au cours d'une première période de temps.

6. Dispositif de communication (1) selon la revendication 5, dans lequel :
la première période de temps (T10) est une période de temps d'attente d'un signal de synchronisation contenant une commande donnant une instruction de récupération sur perte de synchronisation avec l'appareil externe.

7. Dispositif de communication (1) selon l'une quelconque des revendications 1 à 6, dans lequel :
la première unité de communication (2) est configurée de manière à transmettre une commande de démarrage complet à la seconde unité de communication (3) lors de la réception du signal externe au cours d'une seconde période de temps prédéfinie (T2).

8. Dispositif de communication (1) selon l'une quelconque des revendications 1 à 7, comprenant en outre une unité d'alimentation (4) configurée de manière à fournir une puissance de fonctionnement à la première unité de communication (2) et à la seconde unité de communication (3) ;
dans lequel la première unité de communication (2) est configurée de manière à transmettre une commande à l'unité d'alimentation visant à permettre à l'unité d'alimentation (4) de fournir la puissance de fonctionnement à au moins l'un des constituants de la seconde unité de communication (3), à l'exception de la seconde unité sans fil (32), en vue de mettre en oeuvre par conséquent le processus de démarrage préalable.

9. Dispositif de communication (1) selon la revendication 1, comprenant en outre une unité d'alimentation (4) configurée de manière à fournir une puissance de fonctionnement à la première unité de communication (2) et à la seconde unité de communication (3), dans lequel :
la première unité de communication (2) inclut en outre une première unité de commande (21) configurée de manière à commander la première unité sans fil (22) ;
la seconde unité de communication (3) comprend en outre une seconde unité de commande (31) configurée de manière à commander la seconde unité sans fil (32) ; et
la première unité de commande (21) est configurée de manière à transmettre une commande à l'unité d'alimentation (4), visant à permettre à l'unité d'alimentation (4) de fournir la puissance de fonctionnement à la seconde unité de commande (31) en vue de mettre en oeuvre par conséquent le processus de démarrage préalable.

10. Dispositif de communication (1) selon la revendication 9, dans lequel :
l'unité d'alimentation (4) est configurée de manière à fournir la puissance de fonctionnement à la seconde unité sans fil (32) en vue de démarrer par conséquent la seconde unité sans fil (32) lorsque l'unité d'alimentation (4) reçoit la commande de démarrage complet.

11. Système de communication (100) comprenant un dispositif de communication (1) selon l'une quelconque des revendications 1 à 10 et un appareil externe ;
dans lequel l'appareil externe est un appareil de communication (5) configuré de manière à communiquer par voie hertzienne avec le dispositif de communication (1).
